# EUROPEAN PATENT APPLICATION

(11) **EP 3 220 689 A1**
(43) Date of publication of application: **20.09.2017**
(21) Application number: 15859229.5
(22) Date of filing: 27.10.2015
(51) Int. Cl.: H04W 48/08, H04W 72/02, H04W 88/04, H04W 92/18, H04W 76/02

(54) **USER DEVICE AND D2D COMMUNICATIONS METHOD**

(30) Priority: 14.11.2014 JP 2014232136
(71) Applicant: NTT DOCOMO, INC., Chiyoda-ku Tokyo 100-6150 (JP)
(72) Inventor: YASUKAWA, Shimpei, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2015/080279
(87) International publication number: WO 2016/076107

(57) **Abstract**

A user equipment apparatus for supporting D2D (user equipment-to-user equipment) communication includes a generation unit configured to generate information about at least one of a transmission resource which can be used by the user equipment apparatus to transmit a D2D signal and a reception resource which can be used by the user equipment apparatus to receive a D2D signal; and a transmission unit configured to transmit the generated information to another user equipment apparatus; wherein the transmission resource and the reception resource are orthogonal in terms of time.

## Description

### TECHNICAL FIELD

The present invention relates to a user equipment apparatus for supporting D2D (user equipment-to-user equipment) communication and a D2D communication method.

### BACKGROUND ART

In a current mobile communication system such as an LTE (Long Term Evolution) system, communication between user equipment apparatuses UEs is typically performed via a base station eNB or the like by means of communication between the user equipment apparatuses UEs and the base station eNB. Recently, various techniques on D2D communication (also referred to as "Side Link communication") for direct communication between user equipment apparatuses UEs are under discussion.

In D2D communication in an LTE system, in particular, "Communication" is proposed in order for user equipment apparatuses UEs to perform data communication such as a push call, and "Discovery" is also proposed in order for a receiving user equipment apparatus UE to detect a transmitting user equipment apparatus UE by using a transmitted Discovery signal including an ID of the user equipment apparatus UE, an application ID, or the like (see Non-Patent Document 1). It is expected that Communication will be applied to public safety (police or fire radio and so on), for example.

In addition, the use of D2D communication to extend coverage of a base station eNB is also proposed. A user equipment apparatus UE (hereinafter referred to as a "relay terminal") with a signal relay capability in coverage of a base station eNB can relay (hereinafter referred to as "D2D relay") to the base station eNB data received from another user equipment apparatus UE (hereinafter referred to as a "remote terminal"), thereby the remote terminal can communicate with the base station eNB even if the remote terminal is situated outside coverage (see Non-Patent Document 2).

### [Prior Art Document]

### [Non-Patent Document]

[Non-Patent Document 1] 3GPP TR 36.843 V12.0.1 (2014-03)
[Non-Patent Document 2] 3GPP TS 23.303 V12.2.0 (2014-09)

### DISCLOSURE OF INVENTION

### [PROBLEM(S) TO BE SOLVED BY THE INVENTION]

When a resource for D2D communication is not signaled from a base station eNB to an individual user equipment apparatus UE, the resource is provided by the base station eNB or is selected from a predetermined resource range (hereinafter referred to as a "D2D resource pool"). It is under discussion that the D2D resource pool uses a portion of uplink resources which are defined as resources for signal transmission from a user equipment apparatus UE to a base station eNB. In order to perform D2D communication, the user equipment apparatus UE selects a resource from the D2D resource pool to transmit a D2D signal.

On the other hand, a half duplex mode in which communication is performed by switching between transmission and reception is applied to D2D communication. When a user equipment apparatus UE selects a resource from the D2D resource pool on its own decision and transmits a D2D signal, the user equipment apparatus UE cannot receive a D2D signal transmitted from another user equipment apparatus while transmitting the D2D signal.

This problem may also arise in D2D relay. While a relay terminal UE transmits a D2D signal, the relay terminal UE cannot receive from a remote terminal UE a D2D signal to be relayed to a base station eNB. In addition, while a remote terminal UE transmits a D2D signal, the remote terminal UE cannot receive a D2D signal from a relay terminal UE.

Furthermore, unless a request from a remote terminal UE to a relay terminal UE, selection of a relay terminal UE, establishment and management of a connection between a relay terminal UE and a remote terminal UE, and so on are properly performed upon D2D relay, efficiency of D2D relay in relaying by the relay terminal UE a D2D signal from the remote terminal UE to a base station eNB may be reduced. For example, it is not desirable to transmit a request for D2D relay from a remote terminal UE when no relay terminal UE is in the proximity of the remote terminal UE. For example, even if a remote terminal UE selects a relay terminal UE in the proximity of the remote terminal UE, efficiency of D2D relay may be reduced when quality between the selected relay terminal UE and a base station eNB is low. For example, even if an appropriate relay terminal UE is selected, the relay terminal UE cannot relay a D2D signal from a remote terminal UE to a base station eNB, when a connection between the base station eNB and the relay terminal UE is released during D2D relay, when quality between the base station eNB and the relay terminal UE is degraded, when quality between the relay terminal UE and the remote terminal UE is degraded, or the like.

It is an object of the present invention to solve at least one of these problems in D2D communication to achieve efficient D2D communication.

### [MEANS FOR SOLVING THE PROBLEM(S)]

In one aspect of the present invention, there is provided a user equipment apparatus for supporting D2D (user equipment-to-user equipment) communication, including:
a generation unit configured to generate information about at least one of a transmission resource which can be used by the user equipment apparatus to transmit a D2D signal and a reception resource which can be used by the user equipment apparatus to receive a D2D signal; and
a transmission unit configured to transmit the generated information to another user equipment apparatus;
wherein the transmission resource and the reception resource are orthogonal in terms of time.

In another aspect of the present invention, there is provided a user equipment apparatus for supporting D2D (user equipment-to-user equipment) communication, including:
a generation unit configured to generate information indicating that the user equipment apparatus has a capability of relaying a received D2D signal to a base station;
a transmission unit configured to transmit the generated information to another user equipment apparatus;
a reception unit configured to receive from the other user equipment apparatus a relay request for requesting relay of a D2D signal to the base station; and
a connection management unit configured to establish a connection between the other user equipment apparatus and the base station;
wherein the reception unit receives from the other user equipment apparatus the D2D signal to be relayed to the base station, and the transmission unit relays to the base station the D2D signal received from the other user equipment apparatus.

In another aspect of the present invention, there is provided a user equipment apparatus for supporting D2D (user equipment-to-user equipment) communication, including:
a generation unit configured to generate a relay request for requesting one or more relay terminals with a capability of relaying a received D2D signal to a base station to relay a D2D signal to the base station;
a transmission unit configured to transmit the generated relay request to the one or more relay terminals;
a relay terminal selection unit configured to select a relay terminal to which the D2D signal to be transmitted to the base station is transmitted; and
a connection management unit configured to establish a connection to the selected relay terminal and the base station;
wherein the transmission unit transmits to the relay terminal the D2D signal to be transmitted to the base station.

In another aspect of the present invention, there is provided a user equipment apparatus for supporting D2D (user equipment-to-user equipment) communication, including:
a reception unit configured to receive control information for connection management from a connected user equipment apparatus; and
a connection management unit configured to manage a connection to the connected user equipment apparatus based on the received control information.

In another aspect of the present invention, there is provided a D2D (user equipment-to-user equipment) communication method in a user equipment apparatus for supporting D2D communication, including the steps of:
generating information about at least one of a transmission resource which can be used by the user equipment apparatus to transmit a D2D signal and a reception resource which can be used by the user equipment apparatus to receive a D2D signal; and
transmitting the generated information to another user equipment apparatus;
wherein the transmission resource and the reception resource are orthogonal in terms of time.

In another aspect of the present invention, there is provided a D2D (user equipment-to-user equipment) communication method in a user equipment apparatus for supporting D2D communication, including the steps of:
generating information indicating that the user equipment apparatus has a capability of relaying a received D2D signal to a base station;
transmitting the generated information to another user equipment apparatus;
receiving from the other user equipment apparatus a relay request for requesting relay of a D2D signal to the base station;
establishing a connection to the other user equipment apparatus and the base station;
receiving from the other user equipment apparatus the D2D signal to be relayed to the base station; and
relaying to the base station the D2D signal received from the other user equipment apparatus.

In another aspect of the present invention, there is provided a D2D (user equipment-to-user equipment) communication method in a user equipment apparatus for supporting D2D communication, including the steps of:
generating a relay request for requesting one or more relay terminals with a capability of relaying a received D2D signal to a base station to relay a D2D signal to the base station;
transmitting the generated relay request to the one or more relay terminals;
selecting a relay terminal to which the D2D signal to be transmitted to the base station is transmitted;
establishing a connection to the selected relay terminal and the base station; and
transmitting to the relay terminal the D2D signal to be transmitted to the base station.

In another aspect of the present invention, there is provided a D2D (user equipment-to-user equipment) communication method in a user equipment apparatus for supporting D2D communication, including the steps of:
receiving control information for connection management from a connected user equipment apparatus; and
managing a connection to the connected user equipment apparatus based on the received control information.

### [ADVANTAGEOUS EFFECT OF THE INVENTION]

According to the present invention, it is possible to achieve efficient D2D communication.

### BRIEF DESCRIPTION OF THE DRAWINGS

Fig. 1 shows a schematic diagram of a communication system in accordance with an embodiment of the present invention.
Fig. 2 shows a schematic diagram of a D2D resource pool.
Fig. 3 shows a block diagram of a user equipment apparatus in accordance with an embodiment of the present invention.
Fig. 4 shows a block diagram of a baseband signal processing unit in a user equipment apparatus in accordance with an embodiment of the present invention.
Fig. 5 shows a flowchart of a D2D communication method in a user equipment apparatus in accordance with an embodiment of the present invention.
Fig. 6 shows a first sequence diagram illustrating a procedure of D2D relay in a communication system in accordance with an embodiment of the present invention.
Fig. 7 shows a second sequence diagram illustrating a procedure of D2D relay in a communication system in accordance with an embodiment of the present invention.
Fig. 8 shows a block diagram of a baseband signal processing unit in a user equipment apparatus (remote terminal) in accordance with an embodiment of the present invention.
Fig. 9 shows a block diagram of a base station in accordance with an embodiment of the present invention.
Fig. 10 shows a block diagram of a baseband signal processing unit in a base station in accordance with an embodiment of the present invention.

### DETAILED DESCRIPTION OF THE PREFERRED EMBODIMENTS

Embodiments of the present invention are described below with reference to the drawings.

### <Overview of operations in a communication system>

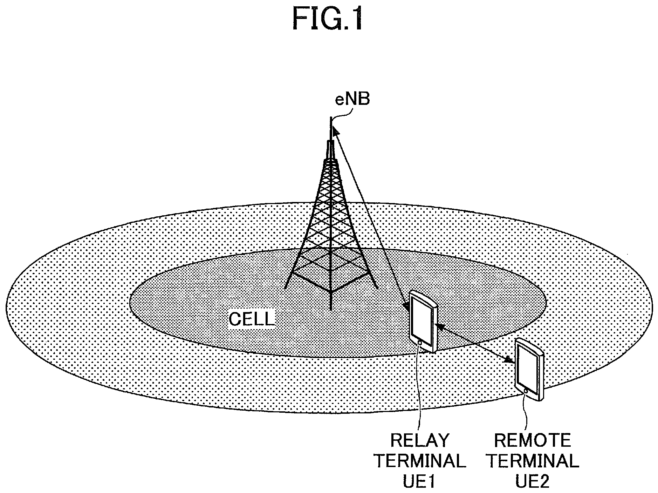

Fig. 1 shows a schematic diagram of a communication system in accordance with an embodiment of the present invention. The communication system in accordance with the embodiment of the present invention is a cellular communication system in which a user equipment apparatus UE1 is situated in coverage (cell) of a base station eNB. The in-coverage user equipment apparatus UE1 has a D2D communication capability, and D2D communication can be performed with another in-coverage user equipment apparatus. The in-coverage user equipment apparatus UE1 can also perform D2D communication with an out-of-coverage user equipment apparatus UE2. The out-of-coverage user equipment apparatus UE2 also has a D2D communication capability, and D2D communication can be performed with another user equipment apparatus. In addition, the in-coverage user equipment apparatus UE1 can perform cellular communication with the base station eNB as usual.

The in-coverage user equipment apparatus UE1 is a relay terminal with a signal relay capability and can relay to the base station eNB a D2D signal received from the out-of-coverage user equipment apparatus UE2 that is a remote terminal. In the following description, a link between the base station eNB and the relay terminal UE1 is referred to as a "backhaul link" and a link between the relay terminal UE1 and the remote terminal UE2 is referred to as an "access link".

To achieve efficient D2D relay in this communication system, the following techniques are described in detail in an embodiment of the present invention.
(1) Orthogonalization of a transmission resource and a reception resource
   In D2D communication, a half duplex mode in which communication is performed by switching between transmission and reception is applied. In other words, a relay terminal UE1 and a remote terminal UE2 cannot receive a D2D signal while transmitting a D2D signal. For this reason, an approach to orthogonalize a transmission resource and a reception resource will be described.
   It should be noted that orthogonalization of the transmission resource and the reception resource can be applied not only to D2D relay but also to a unicast D2D communication between user equipment apparatuses in general.
(2) Selection of a relay terminal UE1
   In order to realize D2D communication, an approach to select a relay terminal UE1 by a remote terminal UE2 will be described. When a plurality of user equipment apparatuses with a signal relay capability are situated in coverage, an approach to select an appropriate relay terminal UE1 from the plurality of user equipment apparatuses will be also described.
(3) Resource configuration for a synchronization signal or a reference signal used to measure quality of the access link as well as selection or reselection of a relay terminal UE1
   In order to select an appropriate relay terminal UE1, a remote terminal UE2 or the relay terminal UE1 needs to measure link quality of the access link. A resource configuration of a synchronization signal or a reference signal used to measure quality of the access link will be described. In addition, an approach to measure quality of the access link based on the synchronization signal or the reference signal to select or reselect a relay terminal UE1 will be described.
(4) Connection management of the access link
   In order to achieve stable D2D relay, it is necessary to manage a connection state of the access link and release the access link which is not suitable or necessary for D2D relay. An approach for connection management to achieve stable D2D relay will be described.
(5) Resource allocation in the backhaul link

In D2D relay, there is a possibility that a relay terminal UE1 is located at the edge of coverage of the base station eNB and does not have a sufficient capacity of the backhaul link. In addition, it is assumed that the amount of traffic from/to the relay terminal UE1 will be increased because the relay terminal UE1 relays a D2D signal from a remote terminal UE2. In order to address this situation, an approach to allocate a resource to the relay terminal UE1 by the base station eNB considering the increasing amount of traffic will be described.

### <Orthogonalization of a transmission resource and a reception resource>

An approach to orthogonalize a transmission resource and a reception resource in order to avoid collision among transmission subframes for user equipment apparatuses UEs due to a half duplex mode in D2D communication will be described.

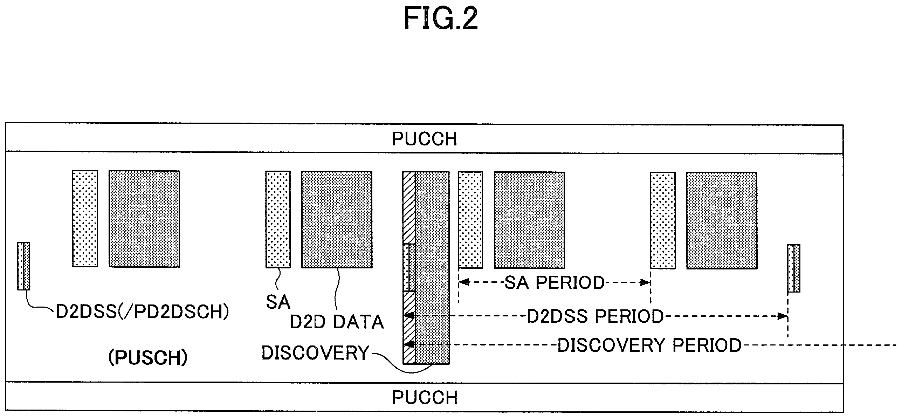

Fig. 2 shows a schematic diagram of a D2D resource pool. In a D2D resource pool which is a group of resources for D2D communication, resources for a D2DSS (D2D Synchronization Signal) that is a synchronization signal for D2D communication, a PD2DSCH (Physical D2D Synchronization Channel) that is a broadcast channel for D2D communication, SA (Scheduling Assignment)/data for Communication, and a Discovery signal are periodically provided. Upon Communication, a transmitting user equipment apparatus notifies a receiving user equipment apparatus of a data transmission resource and control information using SA, and then data are transmitted using the data transmission resource.

A user equipment apparatus UE notifies another user equipment apparatus of both or either of a transmission resource which can be used by the user equipment apparatus UE to transmit a D2D signal and a reception resource which can be used by the user equipment apparatus UE to receive a D2D signal within the D2D resource pool shown in Fig. 2. For example, the relay terminal UE1 may notify the remote terminal UE2 of a transmission resource for the relay terminal UE1 within the D2D resource pool and/or notify the remote terminal UE2 of a reception resource for the relay terminal UE1 within the D2D resource pool. Similarly, the remote terminal UE2 may notify the relay terminal UE1 of a transmission resource or a reception resource for the remote terminal UE2. Information about the transmission resource or the reception resource may be transmitted on the PD2DSCH or by means of a Discovery signal or SA or data for Communication.

For unicast D2D communication in coverage of the base station eNB, the base station eNB may determine a transmission resource and a reception resource which are orthogonal and notifies each user equipment apparatus UE of them.

The transmission resource and the reception resource may be switched on a subframe basis or for each period (SA period) of transmitting SA within the D2D resource pool. Alternatively, a D2D resource pool dedicated for transmission resources and a D2D resource pool dedicated for transmission resources may be defined and the transmission resources and the reception resources may be switched on a D2D resource pool basis.

When the user equipment apparatus UE transmits data to another user equipment apparatus for a plurality of SA periods according to Communication, the user equipment apparatus may not change a T-RPT (time resource pattern of transmission) that is an index of a transmission subframe. In this case, since the other user equipment apparatus can identify that signals are transmitted only using a resource indicated by the T-RPT, the other resources may be used as another transmission resource. It should be noted that an agreement that a T-RPT is not changed in a subsequent SA period, that is, an agreement that only a resource indicated by the T-RPT are used as a transmission resource may be defined in advance as an operation in the user equipment apparatus UE or may be provided to another user equipment apparatus by means of SCI (Sidelink Control Information) (for example, SCI for scheduling or another SCI) that is control information for D2D communication.

A configuration of a user equipment apparatus UE for defining the transmission resource and the reception resource is described below.

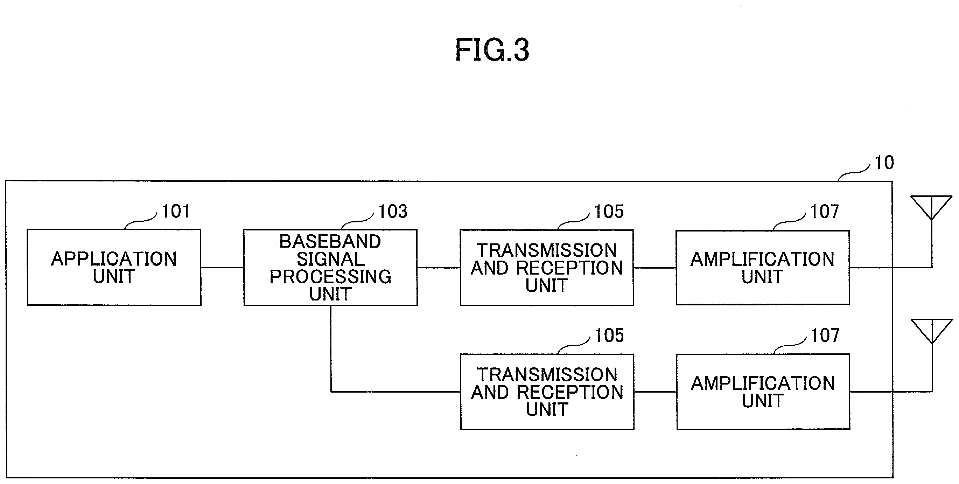

Fig. 3 shows a block diagram of a user equipment apparatus 10 in accordance with an embodiment of the present invention. The user equipment apparatus 10 is a user equipment apparatus capable of communication with a base station eNB and has a D2D communication capability. The user equipment apparatus 10 includes an application unit 101, a baseband signal processing unit 103, a transmission and reception unit 105, and an amplification unit 107. The user equipment apparatus 10 may be an information and communication terminal including a processor such as a CPU (central processing unit), a memory device such as a RAM (random access memory) and a ROM (read only memory), a storage device such as a hard disk, and so on. For example, the application unit 101, the baseband signal processing unit 103, or the like may be implemented in the processor and the storage device or the memory device and realized by executing data or a program stored in the storage device or the memory device in the processor.

Regarding data received from the base station eNB or another user equipment apparatus, a radio frequency signal received by a transmission and reception antenna is amplified by the amplification unit 107, and frequency-converted to a baseband signal by the transmission and reception unit 105. The baseband signal processing unit 103 performs reception processing of the baseband signal such as FFT processing, error correction decoding, and retransmission control. Downlink data in the reception-processed data are forwarded to the application unit 101. The application unit 101 performs processing on a higher layer than the physical layer or the MAC layer, for example.

On the other hand, data to be transmitted to the base station eNB or another user equipment apparatus are input from the application unit 101 to the baseband signal processing unit 103. The baseband signal processing unit 103 performs transmission processing for retransmission control, channel encoding, DFT (Discrete Fourier Transform) processing, and IFFT (Inverse Fast Fourier Transform) processing. The transmission and reception unit 105 converts a baseband signal output from the baseband signal processing unit 103 to a radio frequency band signal. Then, the signal is amplified by the amplification unit 107 and transmitted from the transmission and reception antenna. When a plurality of transmission and reception antennas are used, a plurality of transmission and reception units 105 and a plurality of amplification units 107 may be included in the user equipment apparatus 10.

In an embodiment of the present invention, the baseband signal processing unit 103 determines a transmission resource and a reception resource. In the following description, a configuration of the baseband signal processing unit 103 is described in detail.

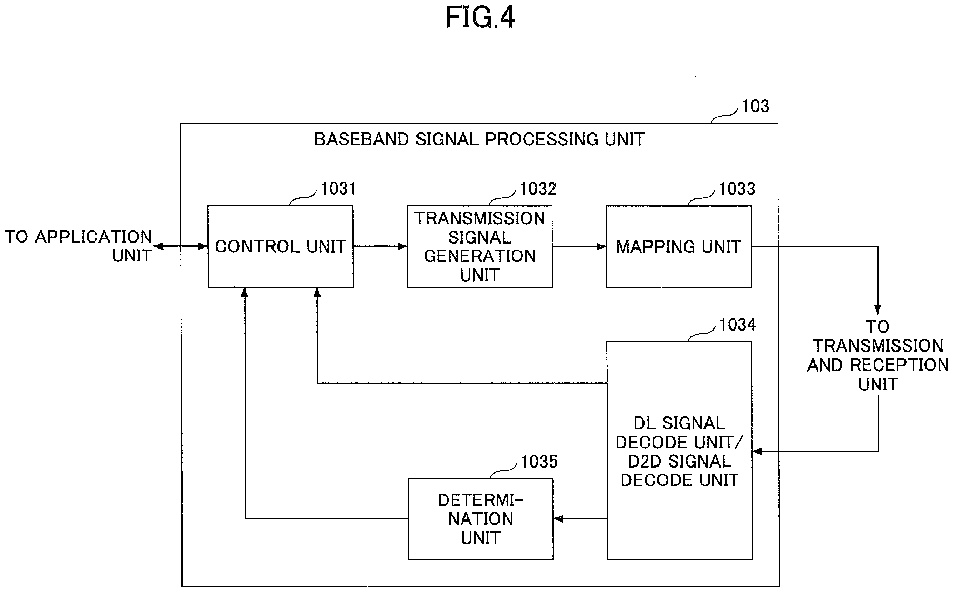

Fig. 4 shows a block diagram of the baseband signal processing unit 103 in the user equipment apparatus 10 in accordance with an embodiment of the present invention. The baseband signal processing unit 103 includes a control unit 1031, a transmission signal generation unit 1032, a mapping unit 1033, a downlink (DL) signal decode unit/D2D signal decode unit 1034, and a determination unit 1035. While in the baseband signal processing unit 103 shown in Fig. 4, both processing for D2D communication and processing for cellular communication are performed by the transmission signal generation unit 1032, the downlink (DL) signal decode unit/D2D signal decode unit 1034, and the determination unit 1035, these functional units may be provided separately for D2D communication and cellular communication.

The control unit 1031 performs total management of the baseband signal processing unit 103. To transmit a signal to a base station eNB through uplink or to another user equipment apparatus, the control unit 1030 provides data input from the application unit 101 to the transmission signal generation unit 1032. Upon receiving a signal from the base station eNB through downlink or from another user equipment apparatus, the control unit 1031 provides data reception-processed by the DL signal decode unit/D2D signal decode unit 1034 to the application unit 101.

The control unit 1031 also determines a transmission resource and a reception resource for the user equipment apparatus 10. The transmission resource and the reception resource for the user equipment apparatus 10 may be determined by the user equipment apparatus 10 on its own decision and provided to another user equipment apparatus. Alternatively, the transmission resource and the reception resource for the user equipment apparatus 10 may be determined based on information about the transmission resource and the reception resource provided by another user equipment apparatus or the base station. As described above, the transmission resource and the reception resource are orthogonalized on a subframe basis, on a period (SA period) of transmitting SA basis, or on a D2D resource pool basis. The control unit 1031 also determines that a T-RPT is not changed in a subsequent SA period upon determining the transmission resource.

The signal generation unit 1032 generates a signal to be transmitted to the base station eNB or another user equipment apparatus. A signal to be transmitted to the base station eNB includes data and control information and is transmitted using a WAN resource. A signal to be transmitted to the other user equipment apparatus includes a PD2DSCH, a D2DSS, SA/data, a Discovery signal, and so on and is transmitted using a resource within a D2D resource pool. When the user equipment apparatus 10 determines the transmission resource and the reception resource on its own decision and provides them to the other user equipment apparatus, the transmission signal generation unit 1032 generates information about at least one of the transmission resource and the reception resource determined by the control unit 1031.

When the signal generated by the signal generation unit 1032 is transmitted to the base station eNB, the mapping unit 1033 maps the signal to a WAN resource determined by a scheduling unit in the base station eNB. When the signal generated by the signal generation unit 1032 is transmitted to the other user equipment apparatus, the mapping unit 1033 maps the signal to the transmission resource for the user equipment apparatus 10. The signal mapped to an appropriate resource is transmitted to the base station eNB or the other user equipment apparatus via the transmission and reception unit 105, the amplification unit 107, and the transmission and reception antenna.

The DL signal decode/D2D signal decode unit 1034 receives a signal from the base station eNB through downlink and data received on a PDSCH (Physical Downlink Shared Channel) are input to the control unit 1031 to provide the data to the application unit 101. The DL signal decode unit/D2D signal decode unit 1034 also receives a signal from another user equipment apparatus and data included in the received signal are input to the control unit 1031 to provide the data to the application unit 101. When the transmission resource or the reception resource is provided by the other user equipment apparatus or the base station, a signal received by the other user equipment apparatus or the base station includes information about at least one of the transmission resource and the reception resource.

The determination unit 1035 determines whether to retransmit a signal received on the PDSCH. When the reception of the signal on the PDSCH is successful, the determination unit 1035 generates acknowledgement information (ACK) indicating that retransmission is not needed. When the reception of the signal on the PDSCH has failed, the determination unit 1035 generates acknowledgement information (NACK) indicating that retransmission is needed. When the reception of the D2D signal is successful, the determination unit 1035 generates acknowledgement information (ACK) indicating that retransmission is not needed. When the reception of the D2D signal has failed, the determination unit 1035 generates acknowledgement information (NACK) indicating that retransmission is needed.

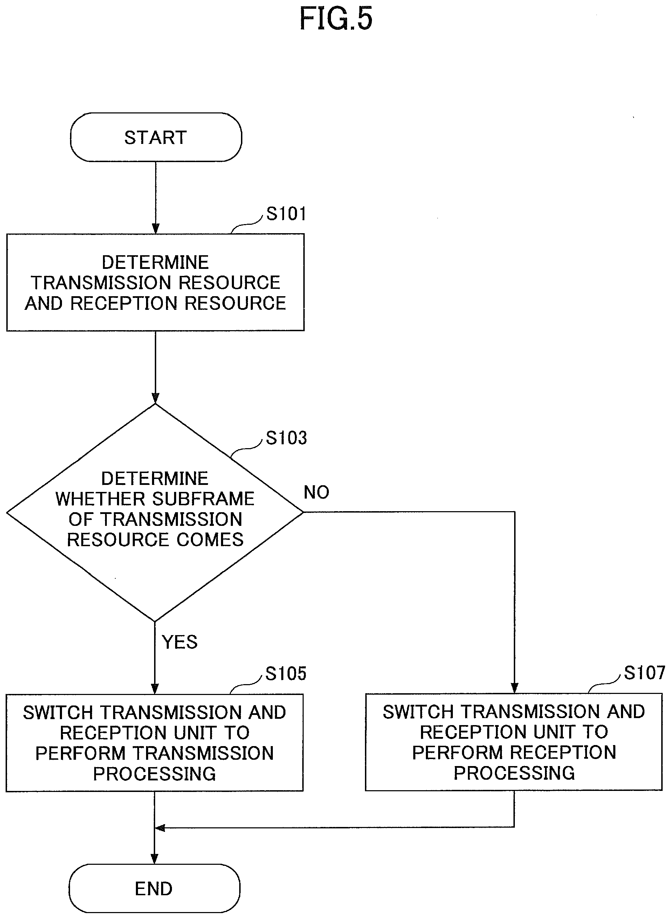

Fig. 5 shows a flowchart of a D2D communication method in a user equipment apparatus 10 in accordance with an embodiment of the present invention.

The control unit 1031 in the user equipment apparatus 10 determines a transmission resource and a reception resource on its own decision or information provided by another user equipment apparatus or the base station (S101). When the control unit 1031 determines the transmission resource and the reception resource on its own decision, information about at least one of the transmission resource and the reception resource is transmitted to another user equipment apparatus.

In a subframe of the transmission resource (S103: YES), the control unit 1031 in the user equipment apparatus 10 switches the transmission and reception unit 105 to perform transmission processing (S105). On the other hand, in a subframe of the reception resource (S103: NO), the control unit 1031 in the user equipment apparatus 10 switches the transmission and reception unit 105 to perform reception processing (S107).

By performing transmission processing in the transmission resource and reception processing in the reception resource in this manner, collision among transmission resources for user equipment apparatuses UEs in D2D communication can be avoided.

### <Selection of a relay terminal UE1>

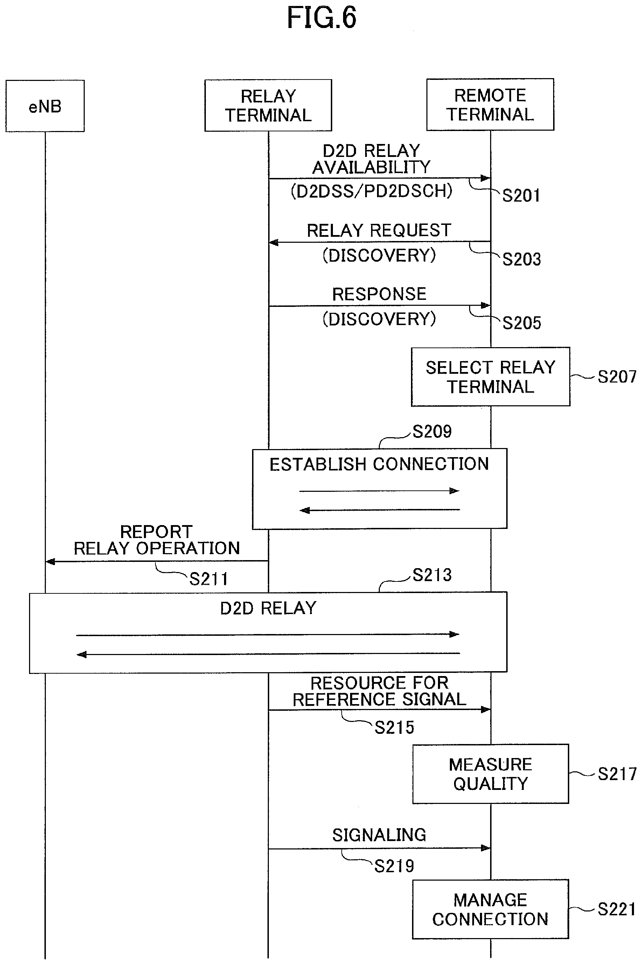

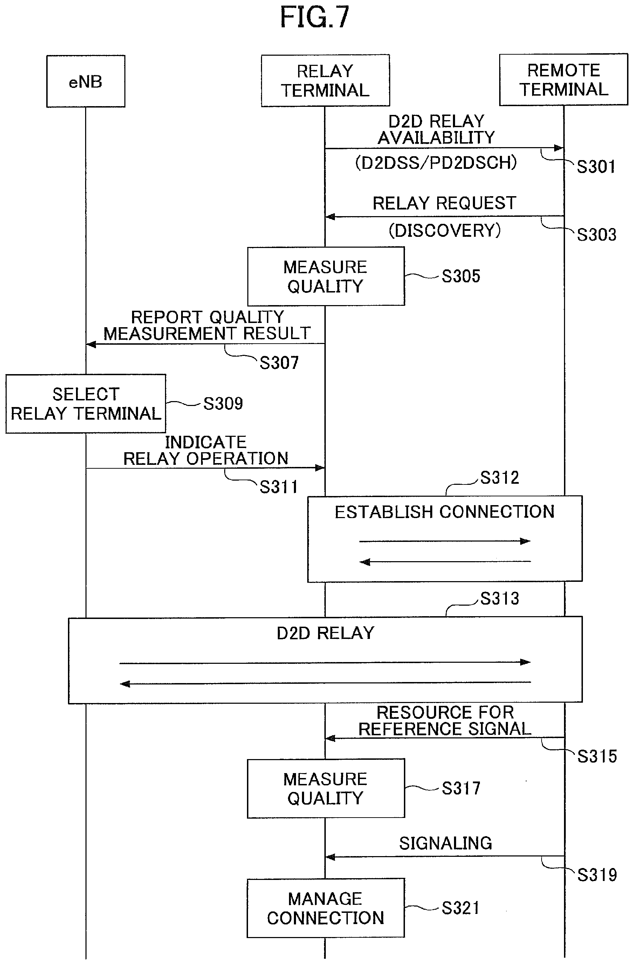

Next, selection of a relay terminal UE1, a resource configuration for a synchronization signal or a reference signal used to measure quality of the access link, selection or reselection of a relay terminal UE1, and connection management in D2D relay are described with reference to Figs. 6 and 7.

Figs. 6 and 7 show sequence diagrams illustrating a procedure of D2D relay in a communication system in accordance with an embodiment of the present invention. Fig. 6 shows an example where the remote terminal UE2 selects a relay terminal UE1 and Fig. 7 shows an example where the base station eNB selects a relay terminal UE1.

With reference to Fig. 6, an example where the remote terminal UE2 selects a relay terminal UE1 is described below.

To achieve D2D relay, the remote terminal UE2 needs to detect one or more relay terminals with a relay capability in the proximity of the remote terminal UE2 and select from the one or more relay terminals a destination relay terminal UE1 to which a D2D signal is transmitted.

For this reason, the relay terminal UE1 may notify the remote terminal UE2 of information (D2D relay availability) indicating that the relay terminal UE1 has a capability of relaying a DD2D signal to the base station (S201). The notification of D2D relay availability may be provided by using a D2DSS or a PD2DSCH or provided by using a Discovery signal used in common among user equipment apparatuses UEs.

As described with reference to Fig. 2, a D2DSS/PD2DSCH, a Discovery signal, and so on are periodically transmitted within the D2D resource pool. When the notification of D2D relay availability is provided by using the D2DSS/PD2DSCH, the D2D relay availability may be provided by using the D2DSS/PD2DSH associated with the resource of the Discovery signal. For example, a dedicated sequence indicating D2D relay availability may be used in the D2DSS or a dedicated sequence indicating D2D relay availability may be used in the D2DSS associated with the Discovery signal. Alternatively, the notification of D2D relay availability may be provided by using the PD2DSCH. The dedicated D2DSS or PD2DSCH indicating D2D relay availability may be distinguished by changing a format such as a transmission resource, the number of bits, or a reference signal sequence, for example, in order for the remote terminal UE2 to perform blind detection. When the notification of D2D relay availability is provided by using the PD2DSCH, the PD2DSCH may include information about a resource used by the remote terminal UE2 to transmit a D2D relay request to the relay terminal UE1 as described below. A resource used to transmit the D2D relay request may be determined based on a time-frequency resource in which the D2DSS/PD2DSCH is transmitted.

The remote terminal UE2 transmits to the relay terminal UE1 a relay request (D2D relay request) of a D2D signal to be transmitted to the base station eNB (S203). In order to avoid an unnecessary D2D relay request, only the remote terminal UE2 which receives D2D relay availability may transmit a D2D relay request. When information about a resource used to transmit the D2D relay request is provided by using the PD2DSCH, the remote terminal UE2 may transmit the D2D relay request based on information about the resource provided by using the PD2DSH. Alternatively, the remote terminal UE2 may determine a resource used to transmit the D2D relay request based on a time-frequency resource in which the D2DSS/PD2DSCH indicating D2D relay availability is transmitted, and then transmit the D2D relay request. The D2D relay request may include a capacity of a backhaul link required by the remote terminal UE2. The D2D relay request may be provided by means of a Discovery signal or by means of Communication. The D2D relay request may be transmitted to the specific relay terminal UE1 or a plurality of user equipment apparatuses UEs. When the D2D relay request is transmitted to a plurality of user equipment apparatuses UEs, the D2D relay request may be transmitted individually to each of the plurality of user equipment apparatuses UEs or may be broadcast to the plurality of user equipment apparatuses UEs.

The D2D relay request may also include information about the Discovery signal which is used upon receiving D2D relay availability or information about a resource index. Although a Discovery signal is broadcast to a plurality of user equipment apparatuses UEs, the D2D relay request can be transmitted to a specific user equipment apparatus UE by including these kinds of information. When the D2D relay request is transmitted by means of Communication, the D2D relay request can be transmitted without specifying a destination user equipment apparatus UE, its address, or the like.

When the remote terminal UE2 transmits a D2D relay request to a specific user equipment apparatus UE1, the remote terminal UE2 may select, based on quality of an access link, from a plurality of user equipment apparatuses UEs the relay terminal UE1 to which a D2D signal to be transmitted to the base station eNB is transmitted, and then transmit the D2D relay request. The selection of the relay terminal UE1 based on quality of the access link will be described below in detail.

The relay terminal UE1 which receives the D2D relay request may transmit a response indicating that the relay terminal UE1 can perform D2D relay (S205). When a capacity of a backhaul link required by the remote terminal UE2 is included in the D2D relay request, the relay terminal UE1 may transmit a response indicating that the relay terminal UE1 can perform D2D relay when the relay terminal UE1 can satisfy the requirement for the capacity of the backhaul link.

When the remote terminal UE2 receives a response from a single user equipment apparatus UE, the remote terminal UE2 may select the user equipment apparatus UE as a relay terminal UE1 to which a D2D signal to be transmitted to the base station eNB is transmitted. Alternatively, when the remote terminal receives responses from a plurality of user equipment apparatuses UEs, the remote terminal UE2 may select a relay terminal UE1 to which a D2D signal to be transmitted to the base station eNB is transmitted based on quality of an access link (S207). For example, the remote terminal UE2 may measure quality of a synchronization signal or a reference signal transmitted on the access link and may select as a relay terminal UE1 a user equipment apparatus with maximum quality of the access link or with quality of the access link which is higher than a predetermined threshold. In order to optimize the access link, the relay terminal UE1 may periodically provide a notification that the relay terminal UE1 can perform D2D relay by means of a terminal-specific Discovery signal based on an indication by the base station eNB, thereby implementing both the D2D relay availability and measurement of quality of the access link.

The remote terminal UE2 may also receive quality of a backhaul link from an in-coverage user equipment apparatus UE upon D2D relay availability (S201), upon a response to the D2D relay request (S205), or the like. In this case, the remote terminal UE2 can select a relay terminal UE1 based on quality of the backhaul link and quality of the access link. For example, the remote terminal UE2 may select a user equipment apparatus UE with quality of the backhaul link which is higher than a predetermined threshold and with maximum quality of the access link or with quality of the access link which is higher than a predetermined threshold as a relay terminal UE1 to which a D2D signal to be transmitted to the base station eNB is transmitted.

Then, a connection is established between the terminals according to the aspect of D2D relay (S209). For example, when D2D relay is implemented on an IP layer, IP addresses or the like are determined between the relay terminal UE1 and the remote terminal UE2. The relay terminal UE1 may report to the base station eNB that the relay terminal UE1 acts as a relay terminal for the remote terminal UE2, that is, the relay terminal UE1 relays a D2D signal from the remote terminal UE2 to the base station eNB (S211). Then, D2D relay is implemented (S213). For example, upon implementing D2D relay (S213), a tunnel may be established on the IP layer between an MME (Mobility Management Entity), the base station eNB, the relay terminal UE1, and the remote terminal UE2.

Instead of reporting to the base station eNB that the relay terminal UE1 performs D2D relay in step S211, a core network element (for example, MME) may notify the base station eNB that the relay terminal UE1 performs D2D relay after the tunnel for D2D relay is established.

Steps S215-S221 in Fig. 6 will be described below in detail.

With reference to Fig. 7, en example where the base station eNB selects a relay terminal UE1 is described.

In a similar manner to step S201 in Fig. 6, the relay terminal UE1 may notify the remote terminal UE2 of D2D relay availability (S301).

In a similar manner to S203 in Fig. 6, the remote terminal UE2 transmits a D2D relay request to the relay terminal UE1 (S303).

When the relay terminal UE1 receives the D2D relay request, the relay terminal UE1 measures quality of an access link between the relay terminal UE1 and the remote terminal UE2 (S305) and reports a quality measurement result to the base station eNB (S307). Quality of the access link may be measured by the relay terminal UE1 or may be measured by the remote terminal UE2 and reported to the relay terminal UE1. In this step, the relay terminal UE1 may also report quality of a backhaul link between the relay terminal UE1 and the base station eNB. In addition, the relay terminal UE1 may also report a required data rate for the access link or the backhaul link or quality of the access link or the backhaul link.

The base station eNB selects a relay terminal based on quality of the backhaul link and quality of the access link (S309). For example, even if quality of an access link is high, a user equipment apparatus with low quality of a backhaul link is not suitable for D2D relay. For example, the base station eNB may select as a relay terminal UE1 a user equipment apparatus UE with quality of the backhaul link which is higher than a predetermined threshold and with maximum quality of the access link or with quality of the access link which is higher than a predetermined threshold. When the required data rate or quality is not satisfied, the base station eNB may reject D2D relay.

The base station eNB indicates a D2D relay operation to the selected relay terminal UE1 (S311), and then a connection is established, for example, IP addresses or the like are determined between the relay terminal UE1 and the remote terminal UE2 (S312). Then, D2D relay is implemented (S313).

Steps S315-S321 in Fig. 7 will be described below in detail.

Next, a configuration of the remote terminal UE2 is described below. The remote terminal UE2 also includes an application unit 101, a baseband signal processing unit 103, a transmission and reception unit 105, and an amplification unit 107 as shown in Fig. 3.

In the remote terminal UE2, a request for a D2D relay, selection of a relay terminal UE1, measurement of quality of an access link, and so on are performed by the baseband signal processing unit 103. In the following description, a configuration of the baseband signal processing unit 103 is described in detail.

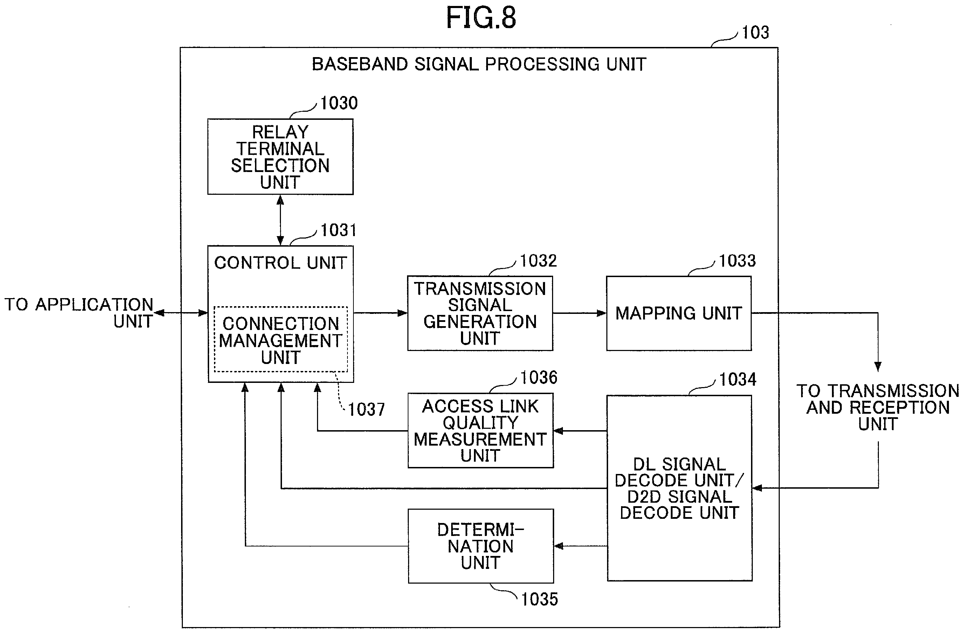

Fig. 8 shows a block diagram of the baseband signal processing unit 103 in the user equipment apparatus 10 (remote terminal UE2) in accordance with an embodiment of the present invention. The baseband signal processing unit 103 includes a relay terminal selection unit 1030 and an access link quality measurement unit 1036 in addition to the components in the baseband signal processing unit 103 shown in Fig. 4. The following description focuses on differences from the baseband signal processing unit 103 shown in Fig. 4.

The relay terminal selection unit 1030 selects a relay terminal UE1 to which a D2D signal to be transmitted to the base station eNB is transmitted. The relay terminal selection unit 1030 may select a relay terminal UE1 to which a D2D signal to be transmitted to the base station eNB is transmitted upon transmitting a D2D relay request or may select a relay terminal UE1 to which a D2D signal to be transmitted to the base station eNB is transmitted among user equipment apparatuses UEs from which a response to the D2D relay request is received. The relay terminal selection unit 1030 may select a relay terminal UE1 based on quality of an access link. When quality of a backhaul link is received from an in-coverage user equipment apparatus, the relay terminal selection unit 1030 may select a relay terminal UE1 based on quality of the backhaul link and quality of the access link.

The control unit 1031 performs total management of the baseband signal processing unit 103. To transmit a signal to the relay terminal UE1, the control unit 1030 provides data input from the application unit 101 to the transmission signal generation unit 1032. Upon receiving a signal from the relay terminal UE1, the control unit 1031 provides data reception-processed by the DL signal decode unit/D2D signal decode unit 1034 to the application unit 101.

The control unit 1031 also instructs the transmission signal generation unit 1032 to generate a Discovery signal or SA/data for Communication used for a D2D relay request, when there are data to be transmitted to the base station eNB. When D2D relay availability is received from a user equipment apparatus UE, the control unit may transmit a D2D relay request to the user equipment apparatus UE from which the D2D relay availability is received.

The control unit 1031 also includes a connection management unit 1037 configured to establish a connection to the relay terminal which is selected by the relay terminal selection unit 1030 and the base station eNB. For example, when D2D relay is implemented on an IP layer, the connection management unit 1037 determines an IP address for the relay terminal UE1 and establishes a tunnel to an MME on the IP layer, for example.

The transmission signal generation unit 1032 generates a signal to be transmitted to the relay terminal UE1. A signal to be transmitted to the relay terminal UE1 includes a Discovery signal or SA/data for Communication used for a D2D relay request and data to be transmitted to the base station eNB.

The mapping unit 1033 maps the signal generated by the transmission signal generation unit 1032 to a resource within a D2D resource pool.

The DL signal decode unit/D2D signal decode unit 1034 receives a signal from the relay terminal UE1 and data included in the received signal are input to the control unit 1031 to provide the data to the application unit 101. A signal received by the relay terminal UE1 includes D2D relay availability, a response to the D2D relay request, and so on.

The access link quality measurement unit 1036 measures quality of an access link between the remote terminal UE2 and the relay terminal UE1. To measure quality of the access link, a synchronization signal or a reference signal such as a D2DSS, a DM-RS (Demodulation Reference Signal), an SRS (Sounding Reference Signal), or the like is used. The measured quality of the access link is provided via the control unit 1031 to the relay terminal selection unit 1030 for selection of the relay terminal UE1.

Next, a configuration of the relay terminal UE1 is described below. The relay terminal UE1 also includes an application unit 101, a baseband signal processing unit 103, a transmission and reception unit 105, and an amplification unit 107 as shown in Fig. 3.

In the relay terminal UE1, the baseband signal processing unit 103 performs determination of D2D relay availability, implementation of D2D relay between the remote terminal UE2 and the base station eNB, measurement of quality of an access link, and so on. In the following description, a configuration of the baseband signal processing unit 103 is described in detail.

The baseband signal processing unit 103 in the relay terminal UE1 includes similar components in the baseband signal processing unit 103 shown in Fig. 4. The following description focuses on differences from the baseband signal processing unit 103 shown in Fig. 4.

The control unit 1031 performs total management of the baseband signal processing unit 103. To transmit a signal to the base station eNB or the remote terminal UE2, the control unit 1030 provides data input from the application unit 101 to the transmission signal generation unit 1032. Upon receiving a signal from the base station eNB through downlink or the remote terminal UE2, the control unit 1031 provides data reception-processed by the DL signal decode unit/D2D signal decode unit 1034 to the application unit 101.

The control unit 1031 also provides to the transmission signal generation unit 1032 data to be transmitted to the base station eNB which are transmitted from the remote terminal UE2 and are reception-processed by the DL signal decode unit/D2D signal decode unit 1034, when a D2D relay operation is indicated according to selection by the remote terminal UE2 or the base station eNB. The control unit 1031 also provides to the transmission signal generation unit 1032 data to be transmitted to the remote terminal UE2 which are transmitted from the base station eNB and are reception-processed by the DL signal decode unit/D2D signal decode unit 1034, when a D2D relay operation is indicated according to selection by the remote terminal UE2 or the base station eNB.

The control unit 1031 also includes a connection management unit (not shown) configured to establish a connection to the remote terminal UE2 and the base station eNB. The connection management unit may establish a connection based on selection of the relay terminal UE1 by the remote terminal UE2 or the base station eNB.

The transmission signal generation unit 1032 generates a signal to be transmitted to the base station eNB or the remote terminal UE2. A signal to be transmitted to the base station eNB includes a required data rate for the backhaul link or quality of the backhaul link, a required data rate for the access link or quality of the access link, a report that the relay terminal UE1 acts as a relay terminal, and so on. A signal to be transmitted to the remote terminal UE2 includes D2D relay availability, a response to a D2D relay request from the remote terminal UE2, and so on.

When the signal generated by the signal generation unit 1032 is transmitted to the base station eNB, the mapping unit 1033 maps the signal to a WAN resource determined by a scheduling unit in the base station eNB. When the signal generated by the signal generation unit 1032 is transmitted to the remote terminal UE2, the mapping unit 1033 maps the signal to a resource within a D2D resource pool.

The DL signal decode/D2D signal decode unit 1034 receives a signal from the base station eNB through downlink and inputs the received signal to the control unit 1031. The DL signal decode/D2D signal decode unit 1034 also receives a signal from the remote terminal UE2 and inputs the received signal to the control unit 1031. A signal received from the base station eNB includes an indication of a D2D relay operation when the relay terminal UE1 is selected by the base station eNB, and so on. A signal received from the remote terminal UE2 includes a Discovery signal or SA/data for Communication used for a D2D relay request and data to be transmitted to the base station eNB. In addition, the DL signal decode/D2D signal decode unit 1034 receives a signal from the remote terminal UE2 and data to be relayed to the base station eNB are input to the control unit 1031 to provide the data to the transmission signal generation unit 1032. The DL signal decode/D2D signal decode unit 1034 also receives a signal from the base station eNB and data to be relayed to the remote terminal UE2 are input to the control unit 1031 to provide the data to the transmission signal generation unit 1032.

The baseband signal processing unit 103 in the relay terminal UE1 also includes a quality measurement unit (not shown). The quality measurement unit measures quality of an access link between the relay terminal UE1 and the remote terminal UE2 and quality of a backhaul link between the relay terminal UE1 and the base station eNB. To measure quality of the access link and quality of the backhaul link, a synchronization signal or a reference signal such as a D2DSS, a DM-RS, an SRS, or the like is used. The measured quality of the access link and the measured quality of the backhaul link are provided via the control unit 1031 to the transmission signal generation unit 1032 for transmission to the base station eNB or the remote terminal UE2.

Next, a configuration of the base station eNB is described below.

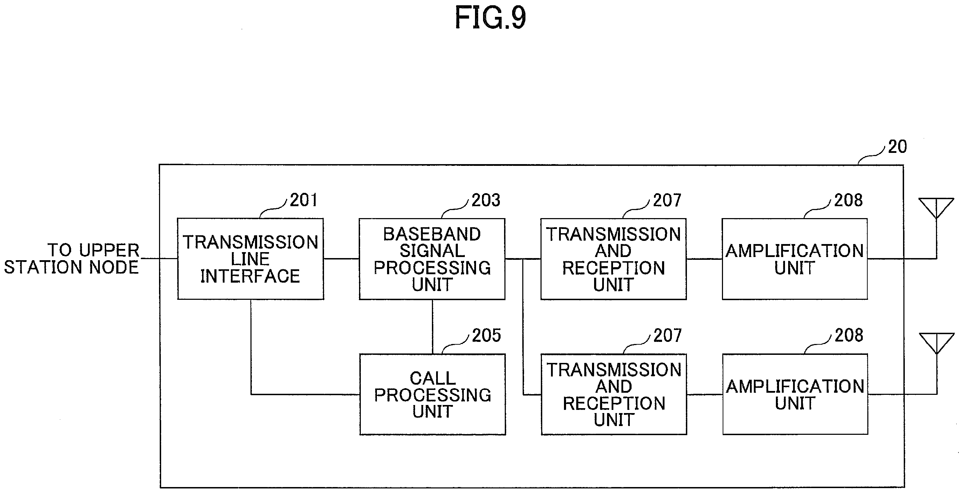

Fig. 9 shows a block diagram of a base station (eNB) 20 in accordance with an embodiment of the present invention. The base station 20 includes a transmission line interface 201, a baseband signal processing unit 203, a call processing unit 205, a transmission and reception unit 207, and an amplification unit 209. The base station 20 may be a communication apparatus including a processor such as a CPU (central processing unit), a memory device such as a RAM (random access memory) and a ROM (read only memory), a storage device such as a hard disk, and so on. For example, the baseband signal processing unit 203, the call processing unit 205, or the like may be implemented in the processor and the storage device or the memory device and realized by executing data or a program stored in the storage device or the memory device in the processor.

Data to be transmitted from the base station 20 to a user equipment apparatus UE through downlink are input from the upper station node to the baseband signal processing unit 203 via the transmission line interface 201.

The baseband signal processing unit 203 performs PDCP (Packet Data Convergence Protocol) layer processing, data segmentation/concatenation, RLC (Radio Link Control) layer transmission processing such as RLC retransmission control, MAC (Medium Access Control) retransmission control such as HARQ (Hybrid Automatic Repeat reQuest) transmission control, scheduling, transport format selection, channel coding, IFFT (Inverse Fast Fourier Transform) processing, and precoding processing. In addition, regarding a signal on a physical downlink control channel that is a type of a downlink control channel, the baseband signal processing unit 203 performs transmission processing such as channel coding and IFFT.

The call processing unit 205 performs call processing such as configuration and release of a communication channel, state management of the base station 20, and radio resource management.

The transmission and reception unit 207 frequency-converts the baseband signal output from the baseband signal processing unit 203 to a radio frequency band signal. The amplification unit 209 amplifies the frequency-converted transmission signal and outputs the signal to a transmission and reception antenna. When a plurality of transmission and reception antennas are used, a plurality of transmission and reception units 207 and a plurality of amplification units 209 may be provided.

Concerning a signal transmitted from a user equipment apparatus to the base station 20 through uplink, a radio frequency signal received by the transmission and reception antenna is amplified by the amplification unit 209, frequency-converted to a baseband signal by the transmission and reception unit 207, and input to the baseband signal processing unit 203.

The baseband signal processing unit 203 performs FFT (Fast Fourier Transform) processing, IDFT (Inverse Discrete Fourier Transform) processing, error correction decoding, reception processing for the MAC retransmission control, RLC layer reception processing, and PDCP layer reception processing of data included in the baseband signal received through uplink. The decoded signal is forwarded to the upper station node via the transmission line interface 201.

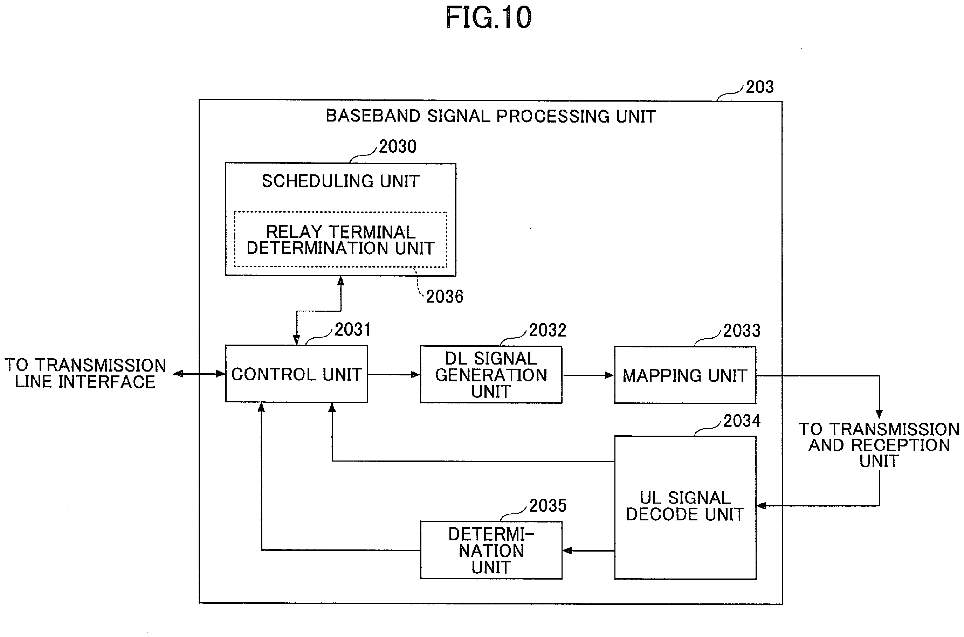

Fig. 10 shows a block diagram of the baseband signal processing unit 203 in the base station 20 in accordance with an embodiment of the present invention. The baseband signal processing unit 203 includes a scheduling unit 2030, a control unit 2031, a downlink (DL) signal generation unit 2032, a mapping unit 2033, an uplink (UL) signal decode unit 2034, and a determination unit 2035.

The scheduling unit 2030 allocates a resource to a user equipment apparatus UE to transmit downlink data to the user equipment apparatus UE or to receive uplink data from the user equipment apparatus UE. The scheduling unit 2030 may include a relay terminal selection unit 2036 configured to select a relay terminal UE1 from a plurality of candidates for the relay terminal. The relay terminal selection unit 2036 selects a relay terminal UE1 based on quality of a backhaul link and quality of an access link. The relay terminal selection unit 2036 may also consider a required data rate for the backhaul link or the access link upon selection of the relay terminal UE1. The relay terminal selection unit 2036 may reject D2D relay without selecting a relay terminal UE1 when the required data rate or quality is not satisfied.

The control unit 2031 performs total management of the baseband signal processing unit 203. To transmit a signal to a user equipment apparatus through downlink, the control unit 2031 provides data input from the transmission line interface 201 to the DL signal generation unit 2032. Upon receiving a signal from a user equipment apparatus through uplink, the control unit 2031 provides data decoded by the UL signal decode unit 2034 to the transmission line interface 201. When the relay terminal selection unit 2036 selects the relay terminal UE1, the control unit 2031 instructs the DL signal generation unit 2032 to generate a signal indicating a D2D relay operation.

The DL signal generation unit 2032 generates a signal to be transmitted to a user equipment apparatus. A signal to be transmitted to a user equipment apparatus includes data and control information. The data is mainly transmitted on a PDSCH (Physical Downlink Shared Channel) and allocation information which is necessary to receive the PDSCH is transmitted on a PDCCH (Physical Downlink Control Channel) or an ePDCCH (enhanced PDCCH). Specifically, a signal to be transmitted to the relay terminal UE1 includes data and control information to be transmitted to the relay terminal UE1 as well as data and control information to be transmitted to the remote terminal UE2. In addition, when the relay terminal selection unit 2036 in the base station eNB selects the relay terminal UE1, a signal to be transmitted to the relay terminal UE1 includes an indication of a D2D relay operation and so on.

The mapping unit 2033 places data to be transmitted to a user equipment apparatus on a resource determined by the scheduling unit 2030.

The UL signal decode unit 2034 decodes a signal received from a user equipment apparatus through uplink. Data received on a PUSCH (Physical Uplink Shared Channel) are input to the control unit 2031 to provide the data to the transmission line interface 201. Acknowledge information (ACK/NACK) received on the PUCCH (Physical Uplink Control Channel) is also input to the control unit 2031 for retransmission processing such as HARQ. Specifically, a signal received from the relay terminal UE1 includes data and control information transmitted by the relay terminal UE1 as well as data and control information transmitted by the remote terminal UE2 to the relay terminal UE1 through D2D relay. In addition, when the remote terminal UE2 selects the relay terminal UE1, a signal received from the relay terminal UE1 includes a report on a D2D relay operation and so on.

The determination unit 2035 determines whether to retransmit a signal received on the PUSCH. When the reception of the signal on the PUSCH is successful, the determination unit 2035 generates acknowledgement information (ACK) indicating that retransmission is not needed. When the reception of the signal on the PUSCH has failed, the determination unit 2035 generates acknowledgement information (NACK) indicating that retransmission is needed.

### <Resource configuration for a synchronization signal or a reference signal used to measure quality of an access link as well as selection or reselection of a relay terminal UE1>

In order to select a relay terminal UE1 from a plurality of user equipment apparatuses, quality of an access link between the relay terminal UE1 and the remote terminal UE2 needs to be measured. To measure quality of the access link, a synchronization signal or a reference signal such as a D2DSS, a DM-RS, an SRS, or the like may be used.

When a reference signal is used to measure quality of the access link, a resource for the reference signal needs to be defined in order to improve quality measurement, because a resource for a Discovery signal including a reference signal is limited.

An example where a DM-RS is used to measure quality of the access link is described below. Since a DM-RS is transmitted when data are transmitted through the access link, there may not be sufficient DM-RSs for quality measurement. For this reason, an additional DM-RS may be defined to measure quality of the access link.

Next, an example where an SRS is used to measure quality of the access link is described below. In this example, an SRS defined to measure quality of the access link or an SRS transmitted through the backhaul link may be used. The SRS defined to measure quality of the access link may be multiplexed (placed) on the end of a D2D resource pool or on any predetermined single subframe, for example. An index or the like indicating the SRS configuration may be provided by a Discovery signal, Communication, or the like. Since the SRS configuration may be complicated depending on the number of transmission and reception antennas, a restriction may be placed on the SRS configuration in advance.

In order to improve measurement of quality of the access link, a Discovery signal including the reference signal may be repeatedly transmitted. In addition, hopping for changing the arrangement of the reference signal on a subframe basis may be applied.

The configuration of the reference signal (a DM-RS, an SRS for measurement of quality of the access link, an SRS for measurement of quality of the backhaul link), the number of repetitions to transmit a Discovery signal, and a hopping parameter may be provided by using the Discovery signal or the PD2DSCH. There are two procedures for transmission of a Discovery signal, one is referred to as "Type 1" in which a user equipment apparatus UE autonomously selects a transmission resource and the other is referred to as "Type 2B" in which the base station eNB selects a transmission resource. The Type 2B procedure may be applied to transmission of a Discovery signal used for the configuration of the reference signal, the number of repetitions to transmit a Discovery signal, and a hopping parameter, in order to avoid collisions among resources.

The remote terminal UE2 may use the synchronization signal or the reference signal not only to initially select a relay terminal UE1 but also to reselect a relay terminal UE1. The remote terminal UE2 may perform measurement in a resource for the synchronization signal or the reference signal for quality measurement of the access link continuously or partially (for example, the remote terminal UE2 may switch between measurement and non-measurement with certain periodicity).

In order to give a higher priority to quality measurement by the remote terminal UE2, the relay terminal UE1 may not perform Communication when a resource for Communication overlaps a resource for the reference signal for quality measurement of the access link.

In order for the remote terminal UE2 in D2D communication with the relay terminal UE1 to detect coverage of cellular communication, the remote terminal UE2 may perform different frequency measurement or measurement of a cellular signal. Different frequency measurement or measurement for detecting coverage of cellular communication may be performed during a period of time which does not fall within a D2D resource pool.

With reference to Figs. 6 and 7, provision of a resource for a reference signal and selection or reselection of a relay terminal UE1 are described below. Fig. 6 shows an example where the relay terminal UE1 provides a resource for a reference signal to the remote terminal UE2 and the remote terminal UE2 measures quality of the access link. Fig. 7 shows an example where the remote terminal UE2 provides a resource for a reference signal to the relay terminal UE1 and the relay terminal UE1 measures quality of the access link.

In an example where the configuration of the reference signal, the number of repetitions to transmit a Discovery signal, and a hopping parameter is provided by the relay terminal UE1 to the remote terminal UE2, the relay terminal UE1 provides information about a resource for the reference signal to the remote terminal UE2 (S215). The remote terminal UE2 measures quality of the access link based on the information received from the relay terminal UE1 (S217).

Alternatively, in an example where the configuration of the reference signal, the number of repetitions to transmit a Discovery signal, and a hopping parameter is provided by the remote terminal UE2 to the relay terminal UE1, the remote terminal UE2 provides information about a resource for the reference signal to the relay terminal UE1 (S315). The relay terminal UE1 measures quality of the access link based on the information received from the remote terminal UE2 (S317).

While Figs. 6 and 7 show that provision of a resource for the reference signal and quality measurement of the access link are performed after communication according to D2D relay, the provision and the quality measurement may be performed anytime during the sequences in Figs. 6 and 7. For example, the provision and the quality measurement may be performed before selection of a relay terminal UE1 by the remote terminal UE2 (S207) or during quality measurement by the relay terminal (S305).

Next, a configuration of a user equipment apparatus (the relay terminal UE1 or the remote terminal UE2) is described below. As described above, provision of a resource for the reference signal or quality measurement of the access link may be performed by the relay terminal UE1 or the remote terminal UE2. The following description about the configuration of the user equipment apparatus focuses on an example where the relay terminal UE1 provides a resource for the reference signal and the remote terminal UE2 measures quality of the access link.

The relay terminal UE1 and the remote terminal UE2 include an application unit 101, a baseband signal processing unit 103, a transmission and reception unit 105, and an amplification unit 107, respectively, as shown in Fig. 3.

In the relay terminal UE1, the base band signal processing unit 103 determines a resource for the reference signal and so on. In the remote terminal UE2, the baseband signal processing unit 103 performs quality measurement of the access link and so on. With reference to Figs. 4 and 8, respectively, the configurations of the baseband processing units 103 in the relay terminal UE1 and the remote terminal UE2 are described below in detail.

In the base band signal processing unit 103 in the relay terminal UE1, the control unit 1031 determines a resource for the reference signal such as a configuration of the reference signal, the number of repetitions to transmit a Discovery signal, and a hopping parameter and inputs information about the resource for the reference signal to the transmission signal generation unit 1032.

In the baseband signal processing unit 103 in the remote terminal UE2, the DL signal decode unit/D2D signal decode unit 1034 receives information about the resource for the reference signal and inputs the received information about the resource for the reference signal to the control unit 1031 and the access link quality measurement unit 1036, so that the access link quality measurement unit 1036 measures quality of the access link.

In the baseband signal processing unit 103 in the remote terminal UE2, the access link quality measurement unit 1036 measures quality of the access link between the remote terminal UE2 and the relay terminal UE1 according to the information about the resource for the reference signal provided by the relay terminal UE1. The measured quality of the access link is input via the control unit 1031 to the relay terminal selection unit 1030 for selection and reselection of a relay terminal UE1. The access link quality measurement unit 1036 in the remote terminal UE2 may perform different frequency measurement or measurement of a cellular signal to detect coverage of cellular communication.

### <Connection management in D2D relay>

Next, connection management of an access link to achieve stable D2D relay is described below.

In this embodiment, control information is defined for managing a connection of an access link after the connection is established between the relay terminal UE1 and the remote terminal UE2. For example, control information for managing the connection of the access link may include signaling that the connection of the access link can be maintained, signaling that the connection of the access link is released, or the like. The control information for managing the connection of the access link may be transmitted with predetermined periodicity or transmitted non-periodically in response to a request from the connected relay terminal UE1 or remote terminal UE2 or in response to the determination on a higher layer. The control information for managing the connection of the access link may be transmitted as a Discovery signal or SCI or data for Communication.

For example, control information for managing the connection of the access link may include information about a backhaul link. For example, when the relay terminal UE1 receives signaling (RRC Connection Release) for releasing the connection from the base station eNB, the relay terminal UE1 may notify the remote terminal UE2 that the backhaul link is released.

In addition, control information for managing the connection of the access link may include a state of the relay terminal UE1. For example, when a movement speed of the relay terminal UE1 exceeds a predetermined threshold, or when the amount of data in the buffer of the relay terminal UE1 exceeds a predetermined threshold (when the buffer is insufficient), the relay terminal UE1 may notify the remote terminal UE2 of these kinds of information.

With reference to Figs. 6 and 7, connection management of D2D relay is described below. Fig. 6 shows an example where the relay terminal UE1 transmits control information for connection management to the remote terminal UE2 and the remote terminal UE2 performs connection management. Fig. 7 shows an example where the remote terminal UE2 transmits control information for connection management to the relay terminal UE1 and the relay terminal UE1 performs connection management.

In an example where control information for managing the connection of the access link is transmitted from the relay terminal UE1 to the remote terminal UE2, the relay terminal UE1 transmits the control information to the remote terminal UE2 (S219).

The remote terminal UE2 manages a state of the connection based on the control information received from the relay terminal UE1 (S221). The remote terminal UE2 may transmit a response (for example, ACK) to the control information received from the relay terminal UE1.

For example, when the backhaul link is released, when a movement speed of the relay terminal UE1 exceeds a predetermined threshold, or when the buffer of the relay terminal UE1 is insufficient, the remote terminal UE2 may release the connection to the relay terminal UE1 based on the control information received from the relay terminal UE1 and transmit a D2D relay request to another relay terminal (S203). The connection may be released after transfer to the remote terminal UE2 of data stored in the buffer of the relay terminal UE1 is complete.

Alternatively, in an example where control information for managing the connection of the access link is transmitted from the remote terminal UE2 to the relay terminal UE1, the remote terminal UE2 transmits the control information to the relay terminal UE1 (S319).

The relay terminal UE1 manages a state of the connection based on the control information received from the remote terminal UE2 (S321). The relay terminal UE1 may transmit a response (for example, ACK) to the control information received from the remote terminal UE2.

For example, when there are no data in the remote terminal UE2 to be transmitted to and received from the base station eNB, and thus signaling for releasing the connection is received from the remote terminal UE2 because D2D relay is not needed, the relay terminal UE1 may release the connection. In this case, the connection may be released after transfer to the remote terminal UE2 of data stored in the buffer of the relay terminal UE1 is complete.

While Figs. 6 and 7 show that connection management is performed after communication according to D2D relay and quality measurement, the connection management may be performed anytime after the connection between the relay terminal UE1 and the remote terminal UE2 is established.

Next, a configuration of a user equipment apparatus (the relay terminal UE1 or the remote terminal UE2) is described below. As described above, connection management of the access link may be performed by the relay terminal UE1 or the remote terminal UE2. The following description about the configuration of the user equipment apparatus focuses on an example where the relay terminal UE1 transmits control information for managing the connection of the access link and the remote terminal UE2 manages the connection of the access link.

The relay terminal UE1 and the remote terminal UE2 include an application unit 101, a baseband signal processing unit 103, a transmission and reception unit 105, and an amplification unit 107, respectively, as shown in Fig. 3.

In the relay terminal UE1, the baseband signal processing unit 103 determines control information for managing the connection of the access link and so on. In the remote terminal UE2, the baseband signal processing unit 103 performs connection management of the access link and so on. With reference to Figs. 4 and 8, respectively, the configurations of the baseband signal processing units 103 in the relay terminal UE1 and the remote terminal UE2 are described below in detail.

In the baseband signal processing unit 103 in the relay terminal UE1, the control unit 1031 inputs control information for managing the connection of the access link to the transmission signal generation unit 1032. For example, the control unit 1031 may determine information about the backhaul link or a state of the relay terminal UE1 such as a movement speed of the relay terminal UE1 or the amount of data in the buffer.

In the baseband signal processing unit 103 in the remote terminal UE2, the DL signal decode unit/D2D signal decode unit 1034 receives control information for managing the connection of the access link and inputs the control information to the control unit 1031, so that the connection management unit 1037 in the control unit 1031 manages the connection of the access link.

In the baseband signal processing unit 103 in the remote terminal UE2, the connection management unit 1037 in the control unit 1031 manages the connection of the access link between the relay terminal UE1 and the remote terminal UE2 according to the control information for managing the connection of the access link transmitted from the relay terminal UE1. For example, when the connection to the relay terminal UE1 can be maintained, the connection management unit 1037 maintains the access link between the relay terminal UE1 and the remote terminal UE2. For example, when the backhaul link is released, when a movement speed of the relay terminal UE1 exceeds a predetermined threshold, or when the buffer of the relay terminal UE1 is insufficient, the connection management unit 1037 releases the connection to the relay terminal UE1.

### <Resource allocation in the backhaul link>

Next, an approach to allocate a resource by the base station eNB considering the increasing amount of traffic from/to the relay terminal UE1 in D2D relay is described.

With reference to Fig. 6, when the relay terminal UE1 is selected by the remote terminal UE2, the base station eNB can determine that the relay terminal UE1 performs D2D relay according to the report from the relay terminal UE1 (S211) or the notification from the core network (for example, MME). Alternatively, with reference to Fig. 7, when the relay terminal UE1 is selected by the base station eNB, the base station eNB can determine that the relay terminal UE1 performs D2D relay. It should be noted that the relay terminal UE1 connects to a plurality of remote terminals.

During communication according to D2D relay (S213 or S313), the base station eNB may allocate an extra resource to the relay terminal UE1. For example, the base station eNB may consider the amount of transmission data of the remote terminal UE2 to which the relay terminal UE1 is connected or the number of remote terminals to which the relay terminal UE1 is connected.

Next, a configuration of the base station eNB is described below. The base station eNB includes a transmission line interface 201, a baseband signal processing unit 203, a call processing unit 205, a transmission and reception unit 207, and an amplification unit 209 as shown in Fig. 9.

The baseband signal processing unit 203 in the base station eNB allocates a resource to the relay terminal UE1 considering the D2D relay operation of the relay terminal UE1.

The baseband signal processing unit 203 includes a scheduling unit 2030, a control unit 2031, a downlink (DL) signal generation unit 2032, a mapping unit 2033, an uplink (UL) signal decode unit 2034, and a determination unit 2035 as shown in Fig. 10.

The scheduling unit 2030 allocates a resource to the relay terminal UE1 to transmit downlink data to the relay terminal UE1 or to receive uplink data from the relay terminal UE1. In this example, the scheduling unit 2030 may allocate a resource considering the amount of transmission data of the remote terminal UE2 to which the relay terminal UE1 is connected or the number of remote terminals to which the relay terminal UE1 is connected.

### <Effects of an embodiment of the present invention>

According to an embodiment of the present invention, it is possible to achieve efficient D2D communication.
(1) By orthogonalizing a transmission resource and a reception resource, collision among transmission resources for user equipment apparatuses UEs in D2D communication can be avoided.
(2) By transmitting D2D relay availability from a relay terminal UE1 for selection of the relay terminal UE1, it is possible to avoid the situation where the remote terminal UE2 transmits a request for D2D relay to a relay terminal UE1 when no relay terminal UE1 is in the proximity of the remote terminal UE2.
   In addition, by selecting a relay terminal considering quality of an access link or quality of a backhaul link when there are a plurality of candidates for the relay terminal, it is possible to select a relay terminal UE1 which is most suitable for the remote terminal UE2. For example, quality of the access link may be prioritized, or balance between quality of the backhaul link and quality of the access link may be considered. By considering the capacity of the backhaul link, an insufficient capacity of the backhaul link can be avoided.
(3) By determining a resource configuration for a synchronization signal or a reference signal used to measure quality of the access link as well as by selecting or reselecting a relay terminal UE1, quality measurement of the access link can be improved.
(4) By managing the connection of the access link, a stable connection to the relay terminal UE1 can be maintained. It is also possible to reselect a relay terminal when the relay terminal UE1 is not suitable for D2D relay. When D2D relay by the relay terminal UE1 is not needed, the access link can be released.
(5) By allocating a resource in the backhaul link, stable throughput between the remote terminal UE2 and the base station eNB can be achieved.

For convenience of explanation, the user equipment apparatus and the base station according to the embodiments of the present invention have been described with reference to functional block diagrams, but the user equipment apparatus and the base station may be implemented in hardware, software, or combinations thereof. In addition, two or more functional elements may be combined as appropriate. The method according to the embodiments of the present invention may be carried out in a different order from the order shown in the embodiments.

While the approaches are described above to achieve efficient D2D communication, the present invention is not limited to the these embodiments, and variations, modifications, alterations, and substitutions can be made by those skilled in the art without deviating from the spirit of the present invention.

The present international application is based on and claims the benefit of priority of Japanese Patent Application No. 2014-232136 filed on November 14, 2014, the entire contents of which are hereby incorporated by reference.

### [DESCRIPTION OF NOTATIONS]

10 user equipment apparatus
101 application unit
103 baseband signal processing unit
105 transmission and reception unit
107 amplification unit
1030 relay terminal selection unit
1031 control unit
1032 transmission signal generation unit
1033 mapping unit
1034 downlink (DL) signal decode unit/D2D signal decode unit
1035 determination unit
1036 access link quality measurement unit
1037 connection management unit
20 base station
201 transmission line interface
203 baseband signal processing unit
205 call processing unit
207 transmission and reception unit
208 amplification unit
2030 scheduling unit
2031 control unit
2032 downlink (DL) signal generation unit
2033 mapping unit
2034 uplink (UL) signal decode unit
2035 determination unit
2036 relay terminal determination unit

## Claims

1. A user equipment apparatus for supporting D2D (user equipment-to-user equipment) communication, comprising:
a generation unit configured to generate information about at least one of a transmission resource which can be used by the user equipment apparatus to transmit a D2D signal and a reception resource which can be used by the user equipment apparatus to receive a D2D signal; and
a transmission unit configured to transmit the generated information to another user equipment apparatus;
wherein the transmission resource and the reception resource are orthogonal in terms of time.

2. A user equipment apparatus for supporting D2D (user equipment-to-user equipment) communication, comprising:
a generation unit configured to generate information indicating that the user equipment apparatus has a capability of relaying a received D2D signal to a base station;
a transmission unit configured to transmit the generated information to another user equipment apparatus;
a reception unit configured to receive from the other user equipment apparatus a relay request for requesting relay of a D2D signal to the base station; and
a connection management unit configured to establish a connection to the other user equipment apparatus and the base station;
wherein the reception unit receives from the other user equipment apparatus the D2D signal to be relayed to the base station, and the transmission unit relays to the base station the D2D signal received from the other user equipment apparatus.

3. A user equipment apparatus for supporting D2D (user equipment-to-user equipment) communication, comprising:
a generation unit configured to generate a relay request for requesting one or more relay terminals with a capability of relaying a received D2D signal to a base station to relay a D2D signal to the base station;
a transmission unit configured to transmit the generated relay request to the one or more relay terminals;
a relay terminal selection unit configured to select a relay terminal to which the D2D signal to be transmitted to the base station is transmitted; and
a connection management unit configured to establish a connection to the selected relay terminal and the base station;
wherein the transmission unit transmits to the relay terminal the D2D signal to be transmitted to the base station.

4. The user equipment apparatus as claimed in claim 2 or 3, wherein the generation unit further generates information about a resource for a reference signal which is used by another user equipment apparatus to measure link quality.

5. The user equipment apparatus as claimed in claim 3, further comprising:
a reception unit configured to receive information about a resource for a reference signal which is used to measure link quality between the user equipment apparatus and the one or more relay terminals; and
a link quality measurement unit configured to measure link quality on the resource for the reference signal between the user equipment apparatus and the relay terminal;
wherein the relay terminal selection unit selects the relay terminal based on the measured link quality.

6. A user equipment apparatus for supporting D2D (user equipment-to-user equipment) communication, comprising:
a reception unit configured to receive control information for connection management from a connected user equipment apparatus; and
a connection management unit configured to manage a connection to the connected user equipment apparatus based on the received control information.

7. A D2D (user equipment-to-user equipment) communication method in a user equipment apparatus for supporting D2D communication, comprising the steps of:
generating information about at least one of a transmission resource which can be used by the user equipment apparatus to transmit a D2D signal and a reception resource which can be used by the user equipment apparatus to receive a D2D signal; and
transmitting the generated information to another user equipment apparatus;
wherein the transmission resource and the reception resource are orthogonal in terms of time.

8. A D2D (user equipment-to-user equipment) communication method in a user equipment apparatus for supporting D2D communication, comprising the steps of:
generating information indicating that the user equipment apparatus has a capability of relaying a received D2D signal to a base station;
transmitting the generated information to another user equipment apparatus;
receiving from the other user equipment apparatus a relay request for requesting relay of a D2D signal to the base station;
establishing a connection to the other user equipment apparatus and the base station;
receiving from the other user equipment apparatus the D2D signal to be relayed to the base station; and
relaying to the base station the D2D signal received from the other user equipment apparatus.

9. A D2D (user equipment-to-user equipment) communication method in a user equipment apparatus for supporting D2D communication, comprising the steps of:
generating a relay request for requesting one or more relay terminals with a capability of relaying a received D2D signal to a base station to relay a D2D signal to the base station;
transmitting the generated relay request to the one or more relay terminals;
selecting a relay terminal to which the D2D signal to be transmitted to the base station is transmitted;
establishing a connection to the selected relay terminal and the base station; and
transmitting to the relay terminal the D2D signal to be transmitted to the base station.

10. A D2D (user equipment-to-user equipment) communication method in a user equipment apparatus for supporting D2D communication, comprising the steps of:
receiving control information for connection management from a connected user equipment apparatus; and
managing a connection to the connected user equipment apparatus based on the received control information.
